(19) **Europäisches Patentamt / European Patent Office / Office européen des brevets**

(11) **EP 1 654 815 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
**H04B 7/06** (2006.01)

(21) Anmeldenummer: **04766200.2**

(22) Anmeldetag: **13.07.2004**

(86) Internationale Anmeldenummer:
**PCT/EP2004/051469**

(87) Internationale Veröffentlichungsnummer:
**WO 2005/018110 (24.02.2005 Gazette 2005/08)**

(54) **VERFAHREN ZUM BETRIEB EINES FUNKKOMMUNIKATIONSSYSTEMS, EMPFANGSSTATION SOWIE SENDESTATION FÜR EIN FUNKKOMMUNIKATIONSSYSTEM**

METHOD FOR OPERATING A RADIO COMMUNICATION SYSTEM, RECEIVER STATION AND SENDING STATION FOR A RADIO COMMUNICATION SYSTEM

PROCEDE POUR FAIRE FONCTIONNER UN SYSTEME DE COMMUNICATION RADIO, STATION RECEPTRICE ET STATION EMETTRICE POUR UN SYSTEME DE COMMUNICATION RADIO

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.08.2003 DE 10337445**

(43) Veröffentlichungstag der Anmeldung:
**10.05.2006 Patentblatt 2006/19**

(73) Patentinhaber: **Nokia Siemens Networks GmbH & Co. KG**
**81541 München (DE)**

(72) Erfinder: **ZIRWAS, Wolfgang**
**82194 Gröbenzell (DE)**

(56) Entgegenhaltungen:
**EP-A- 1 267 443        WO-A-03/063526**
**US-A- 3 717 814**

- **"Description of the eigenbeamformer concept (update) and performance evaluation" 27. Februar 2001 (2001-02-27), 3GPP TSG RAN WG 1, XX, XX, PAGE(S) 1-9 , XP002224882 das ganze Dokument**
- **"Advanced closed loop Tx diversity concept" 4. Juli 2000 (2000-07-04), 3GPP TSG RAN WG 1, XX, XX , XP002169992 das ganze Dokument**
- **"UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)" September 2000 (2000-09), ETSI TS 125 214 V3.4.0, XX, XX, PAGE(S) 1-48 , XP002166612 Seite 31 - Seite 38**

**Beschreibung**

Die Erfindung betrifft ein Verfahren zum Betrieb eines Funkkommunikationssystems sowie eine Empfangsstation und eine Sendestation für ein solches Funkkommunikationssystem.

In Funkkommunikationssystemen werden Signale in Form von elektromagnetischen Wellen über die Luft übertragen. Bei der Übertragung über die Luft kommt es aufgrund unterschiedlichster Einflüsse zu Verzerrungen der zu übertragenden Signale. Aufgrund dieser Verzerrungen weichen die an einer Empfangsstation empfangenen Signale von den von der entsprechenden Sendestation ausgesendeten Signalen ab.

Derzeit werden zahlreiche Forschungsarbeiten auf dem Gebiet der sogenannten MIMO (Multiple Input Multiple Output-) Antennen für Funkkommunikationssysteme durchgeführt. Sowohl der Sender als auch der Empfänger haben dabei jeweils mehrere Antennen. Die MIMO-Technik kann beispielsweise für räumliches Multiplexen oder zum Erzielen von Diversitätsgewinnen eingesetzt werden. MIMO kann die Leistungsfähigkeit eines Funksystems, beispielsweise die spektrale Effizienz, beträchtlich steigern. Jedoch hängt die Leistungsfähigkeit von der Genauigkeit der Informationen ab, die die Übertragungskanäle zwischen Sender und Empfänger in beiden Übertragungsrichtungen betreffen. Um die besten Resultate zu erzielen, sind sowohl Informationen über den Übertragungskanal in der einen wie auch in der anderen Übertragungsrichtung notwendig. Da bei MIMO-Systemen eine große Anzahl von Sende- und Empfangsantennen zum Einsatz kommen und zwischen jeweils einem Antennenpaar ein separater Übertragungskanal mit jeweils individuellen Übertragungseigenschaften ausgebildet wird, ist in einem solchen System die Kenntnis der Übertragungseigenschaften einer sehr großen Anzahl von Kanälen notwendig. Die Anzahl an Kanälen ist auch deshalb so groß, weil für leistungsfähige Algorithmen die Übertragungsfunktion von jeder Sende- zu jeder Empfangsantenne - dass heißt auch die Interferenz zwischen den Antennen - bekannt sein muss.

Bei Funksystemen, die für beide Übertragungsrichtungen das gleiche Frequenzband benutzen, kann aus der Kenntnis der Eigenschaften des Kanals für die eine Übertragungsrichtung auf die Eigenschaften des Kanals der anderen Übertragungsrichtung geschlossen werden. Werden dagegen unterschiedliche Frequenzen pro Übertragungsrichtung verwendet, unterscheiden sich die Kanaleigenschaften unter Umständen deutlich, so dass dieses Vorgehen nicht möglich ist.

Um einem Sender Informationen über den Übertragungskanal zwischen Sender und Empfänger mitzuteilen, wäre es nun möglich, die entsprechenden Informationen beim Empfänger aufgrund von von diesem empfangenen Signalen zu generieren und sie anschließend zum Sender zu übermitteln. Dies würde jedoch erfordern, dass für die Übermittlung dieser Informationen zusätzliche Übertragungskapazität bereitgestellt wird.

Bei sich schnell ändernden Funkkanälen muss diese Information außerdem sehr häufig übermittelt werden.

Der Erfindung liegt die Aufgabe zugrunde, eine entsprechende Information über Eigenschaften eines Übertragungskanals mit möglichst wenig Aufwand von einer Empfängerstation zu einer Sendestation zu übermitteln.

Aus der WO 03/063526 A1 ist ein Funkkommunikationssystem bekannt, bei dem Parameter von Übertragungskanälen in einer ersten Station ermittelt werden und per Funk an eine zweite Station übertragen werden.

Diese Aufgabe wird mit einem Verfahren gemäß Anspruch 1 sowie mit einer Empfangsstation und einer Sendestation gemäß den nebengeordneten Ansprüchen gelöst. Vorteilhafte Aus- und Weiterbildungen der Erfindung sind Gegenstand abhängiger Ansprüche.

Das Verfahren zum Betrieb eines Funkkommunikationssystems sieht vor, dass eine Empfangsstation über einen ersten Übertragungskanal ein Signal von einer Sendestation empfängt. Von der Empfangsstation wird ein Kanalparameter des ersten Übertragungskanals bestimmt. Ein Parameter wenigstens eines von der Empfangsstation über einen zweiten Übertragungskanal zur Sendestation zu übertragenden bestimmten ersten Datensymbols wird zur Mitteilung des Kanalparameters des ersten Übertragungskanals an die Sendestation in Abhängigkeit von dem Kanalparameter geändert.

Der Kanalparameter des ersten Übertragungskanals entspricht einer Information über den ersten Übertragungskanal. Es kann sich dabei beispielsweise um einen Phasenparameter, also eine Information über eine aufgrund der Übertragung über den ersten Übertragungskanal erfolgende Phasenverschiebung, oder auch um einen Amplitudenparameter, also eine aufgrund der Übertragung über den ersten Übertragungskanal erfolgende Amplitudendämpfung, handeln. Der Kanalparameter des ersten Übertragungskanals kann günstigerweise durch die Durchführung einer Kanalschätzung für den ersten Übertragungskanal von der Empfangsstation ermittelt werden. Verfahren zur Kanalschätzung sind dem Fachmann hinlänglich bekannt. Kanalschätzungen können beispielsweise durch Korrelation von empfangenen Pilotsymbolen mit in der Empfangsstation gespeicherten Versionen der Pilotsymbole durchgeführt werden.

Durch die Erfindung ist es möglich, den Kanalparameter des ersten Übertragungskanals ohne zusätzlichen Aufwand an Übertragungskapazität von der Empfangsstation zur Sendestation zu übermitteln. Dies geschieht dadurch, dass aufgrund des Wertes des Kanalparameters lediglich ein Parameter eines ohnehin von der Empfangsstation zur Sendestation zu übertragenden ersten Datensymbols geändert wird. Auf der Seite der Sendestation, die dieses erste Datensymbol empfängt, ist es dann möglich, die Information über den Kanalparameter des ersten Übertragungskanals wieder aus dem empfangenen ersten Datensymbol zu extrahieren.

Das Wiedergewinnen des Wertes des Kanalparameters aus dem empfangenen ersten Datensymbol durch die Sendestation kann beispielsweise dann leicht durchgeführt werden, wenn es sich beim ersten Datensymbol um ein der Sendestation bekanntes Symbol handelt. Das erste Datensymbol kann beispielsweise ein Pilotsymbol sein, dass gleichzeitig zur Schätzung des zweiten Übertragungskanals zwischen Empfangsstation und Sendestation von der Sendestation verwendet wird.

Ist das erste Datensymbol der Sendestation nicht bekannt, kann der Wert des ersten Kanalparameters beispielsweise dadurch von der Sendestation bestimmt werden, indem durch denselben Kanalparameter nicht nur ein Parameter eines ersten Datensymbols sondern auch eines zweiten Datensymbols, dass über den zweiten Übertragungskanal von der Empfangsstation zur Sendestation zu übertragen ist, durch die Empfangsstation beeinflusst wird. Günstigerweise wird der Parameter des von der Empfangsstation zur Sendestation zu übertragenden ersten Datensymbols durch Addition des Wertes des Kanalparameters geändert, während ein Parameter des zweiten von der Empfangsstation zur Sendestation zu übertragenen Datensymbols durch Subtraktion des Wertes des Kanalparameters geändert wird.

Das zweite Datensymbol kann vor oder nach dem ersten Datensymbol von der Empfangsstation zur Sendestation übermittelt werden.

Da der Kanalparameter des ersten Übertragungskanals den Wert des Parameters des ersten Datensymbols beeinflusst, ist es mit der Erfindung möglich, den Kanalparameter in analoger Form zur Sendestation zu übermitteln.

Die Erfindung ist insbesondere auch ohne weitreichende Änderung des entsprechenden Systemstandards anwendbar in Funksystemen, für die im entsprechenden Standard ein derartiges Vorgehen bislang nicht vorgesehen ist. Diese Erfindung kann ohne Änderung der Definition der Luftschnittstelle in bekannten Funksystemen eingesetzt werden, da lediglich die Sendestation und die Empfangsstation so angepasst werden müssen, dass die Beeinflussung des Parameters des ersten Datensymbols durch den Kanalparameter des ersten Übertragungskanals sowie die Extraktion dieser Informationen bei der Sendestation möglich wird.

Die Erfindung kann in beliebigen Funkkommunikationssystemen eingesetzt werden. Sie eignet sich insbesondere auch für den Einsatz in Mobilfunksystemen. Besonders geeignet ist sie für den Einsatz in Systemen, bei dem zwischen Sendestation und Empfangsstation eine große Anzahl von ersten Übertragungskanälen zum Einsatz kommt, wie dies beispielsweise bei MIMO-Systemen der Fall ist. Bei derartigen Systemen ist es von be sonderem Vorteil, dass durch die Erfindung keine zusätzlichen Übertragungsressourcen zur Mitteilung des Kanalparameters an die Sendestation notwendig sind.

Die Erfindung eignet sich beispielsweise zum Einsatz in OFDM-Systemen (Orthogonal Frequency Division Multiplex). Sie kann auch bei den derzeit im Aufbau befindlichen CDMA-Mobilfunksystemen der dritten Generation (beispielsweise UMTS, CDMA 2000) eingesetzt werden.

Der Parameter des von der Empfangsstation zur Sendestation zu übertragenden ersten Datensymbols kann wahlweise durch Addition oder Subtraktion des Wertes des Kanalparameters des ersten Übertragungskanals geändert werden.

Wenn die von der Empfangsstation zu übertragenden Datensymbole, deren Parameter in Abhängigkeit des Kanalparameters des ersten Übertragungskanals geändert wird, Pilotsymbole sind, die der Sendestation von vornherein bekannt sind und die einer Schätzung des zweiten Übertragungskanals durch die Sendestation dienen, dann ist die Ermittlung des Kanalparameters durch die Sendestation besonders leicht möglich. Indem dann beim ersten Datensymbol beispielsweise der Parameter durch Addition des Wertes des Kanalparameters des ersten Übertragungskanals verändert wird und der Parameter des zweiten Datensymbols durch Subtraktion des Kanalparameters verändert wird, lässt sich der Kanalparameter durch die Sendestation leicht ermitteln.

Insbesondere wenn das erste und das zweite Datensymbol identisch sind, kann durch einfache Addition der durch die Sendestation festgestellten Parameter der empfangenen ersten und zweiten Datensymbole und anschließende Division durch zwei der Wert des Kanalparameters ermittelt werden. Dann muss der Sendestation das erste und zweite Datensymbol nicht bekannt sein.

Handelt es sich bei den ersten und zweiten Datensymbole um identische, der Sendestation bekannte Pilotsymbole, kann gleichzeitig anhand dieser beiden Pilotsymbole eine Kanalschätzung des zweiten Übertragungskanals durchgeführt werden. Hierzu ist es lediglich erforderlich, die durch die Sendestation festgestellten Parameter der empfangenen ersten und zweiten Datensymbole voneinander zu subtrahieren und anschließend durch zwei zu dividieren.

Nachdem eine Kanalschätzung auch des zweiten Übertragungskanals anhand dieser beiden Pilotsymbole erfolgt ist, was vorzugsweise zu Beginn eines Übertragungsrahmens erfolgt, kann für nachfolgende Datensymbole, die nun nicht mehr unbedingt der Sendestation bekannt sein müssen, die Sendestation näherungsweise angenommen werden, dass sich der zweite Übertragungskanal nur geringfügig ändert. Dann kann die Sendestation auch bei einem unbekannten ersten und zweiten Datensymbol, das von der Empfangsstation an sie übermittelt wird, für diese anhand der zuvor für den zweiten Übertragungskanal ermittelten Kanalparameter eine korrekte Datendetektion durchführen, wobei angenommen werden kann, dass Abweichungen im Phasendiagramm zwischen dem idealen Wert der Phase des zu detektierenden Symbols und der tatsächlich ermittelten Phase auf die Addition bzw. Subtraktion des Kanalparameters des ersten Übertragungskanals durch die Empfangsstation zurückzuführen sind.

Die erfindungsgemäße Empfangsstation und die erfindungsgemäße Sendestation weisen die notwendigen Komponenten auf, um für die Durchführung des erfindungsgemäßen Verfahrens verwendet werden zu können.

Obwohl für die beiden hier betrachteten Stationen die Begriffe "Empfangsstation" und "Sendestation" verwendet werden, ist es selbstverständlich, das beide Stationen sowohl zum Senden als auch zum Empfangen von Daten in der Lage sind.

Die Erfindung wird im Folgenden anhand eines in den Figuren dargestellten Ausführungsbeispiels näher erläutert. Es zeigen:

Figur 1 ein Ausführungsbeispiel des erfindungsgemäßen Funk- kommunikationssystems und

Figur 2 die Veränderung eines Parameters von Datensymbolen durch eine Empfangsstation aus Figur 1.

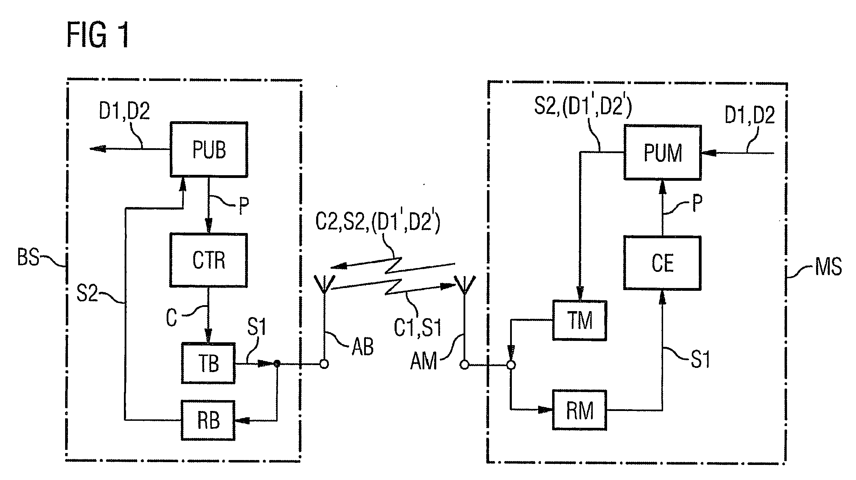

Figur 1 zeigt ein erfindungsgemäßes Funkkommunikationssystem am Beispiel eines Mobilfunksystems.

Mobilfunksysteme weisen netzseitige Basisstationen auf, die stationär sind und zur Versorgung von jeweils einer von einer Vielzahl von Funkzellen dienen. Teilnehmerstationen des Mobilfunksystems, die in der Regel mobil sind, können über die Basisstationen eine Kommunikationsverbindung unterhalten.

Figur 1 zeigt eine Sendestation BS in Form einer Basisstation und eine Empfangsstation in Form einer Teilnehmerstation MS des Mobilfunksystems. Die Sendestation BS weist wenigstens eine Antenne AB auf, die zum Senden und Empfangen von Signalen zur bzw. von der Empfangsstation MS dienen. Die Empfangsstation MS weist wenigstens eine Antenne AM auf, die zum Empfangen bzw. Senden von Signalen von bzw. zur Sendestation BS dient. Die Sendestation BS übermittelt in einem ersten Frequenzbereich über einen ersten Übertragungskanal C1 ein erstes Signal S1 zur Empfangsstation MS. Die Empfangsstation MS sendet in einem zweiten Frequenzbereich über einen zweiten Übertragungskanal C2 zweite Signale S2 zur Sendestation BS. Es handelt sich aufgrund der Verwendung unterschiedlicher Frequenzbereiche für die Abwärtsrichtung (Downlink) und die Aufwärtsrichtung (Uplink) um ein sogenanntes FDD (Frequency Division Duplex) -System. Die Übertragungskanäle C1, C2 können sich auch zusätzlich oder alternativ durch weitere Parameter voneinander unterscheiden, beispielsweise durch unterschiedliche Spreizcodes oder unterschiedliche Zeitschlitze.

Die Sendestation BS weist eine Übertragungseinheit TB auf, die das erste Signal S1 erzeugt, welches anschließend über die Antenne AB und den ersten Übertragungskanal C1 zur Antenne AM der Empfangsstation MS übertragen wird. Die Empfangsstation MS weist eine Empfangseinheit RM auf, von der das erste Signal S1 einer Kanalschätzeinheit CE zugeführt wird. Die Kanalschätzeinheit CE führt anhand des ersten Signals S1 eine Schätzung des ersten Übertragungskanals C1 durch. Dies geschieht dadurch, dass das erste Signal S1 Pilotsymbole enthält, die der Empfangsstation MS bekannt sind. Die Kanalschätzeinheit CE führt eine Korrelation zwischen den empfangenen Pilotsymbolen und einer in der Empfangsstation MS gespeicherten Version dieser Pilotsymbole durch, um die Eigenschaften des ersten Übertragungskanals C1 zu ermitteln. Als Ergebnis der Kanalschätzung ermittelt die Kanalschätzeinheit CE wenigstens einen Kanalparameter P des ersten Übertragungskanals C1. Beim vorliegenden Ausführungsbeispiel handelt es sich bei dem Kanalparameter P um einen Phasenparameter, dass heißt eine Information über eine Phasenverzerrung, die das erste Signal S1 durch die Übertragung über den ersten Übertragungskanal C1 erfährt.

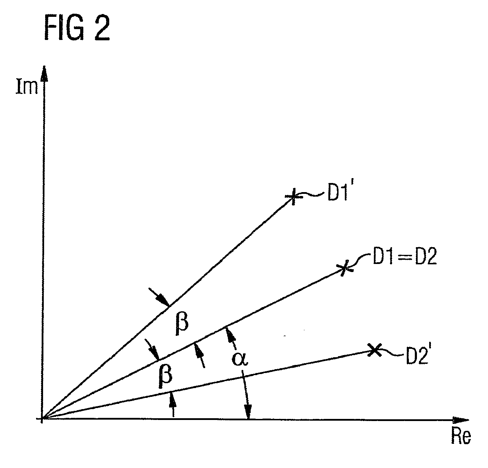

Die Empfangsstation MS enthält weiterhin eine Verarbeitungseinheit PUM, der der Kanalparameter P von der Kanalschätzeinheit CE zugeführt wird. Weiterhin werden der Verarbeitungseinheit PUM ein erstes Datensymbol D1 und ein zweites Datensymbol D2 zugeführt, die unabhängig von der Kanalschätzung des ersten Übertragungskanals C1 zur Sendestation BS zu übertragen sind. Die Verarbeitungseinheit PUM der Empfangsstation MS variiert nun einen Parameter der beiden Datensymbole D1, D2, nämlich ihre Phase, in Abhängigkeit von dem Kanalparameter P. Dies wird weiter unten anhand der Figur 2 noch näher erläutert. Als Ergebnis liefert die Verarbeitungseinheit PUM ein Signal S2 mit modifizierten Datensymbolen D1', D2' an eine Sendeeinheit TM der Empfangsstation MS. Die Sendeeinheit TM überträgt das zweite Signal S2 zur Antenne AM der Sendestation MS, von der das zweite Signal S2 über den zweiten Übertragungskanal C2 zur Antenne AB der Sendestation BS übermittelt wird.

Von der Antenne AB der Sendestation BS gelangt das zweite Signal S2 über eine Empfangseinheit RB der Sendestation BS zu einer Verarbeitungseinheit PUB. Die Verarbeitungseinheit PUB trennt durch eine Operation, die entgegengesetzt zu derjenigen der Verarbeitungseinheit PUM der Empfangsstation MS ist, die ursprünglichen Datensymbole D1, D2 von dem Kanalparameter P. Der Kanalparameter P wird anschließend einer Steuereinheit CTR zugeführt, die in seiner Abhängigkeit entsprechende Steuersignale C erzeugt, die der Sendeeinheit TB der Sendestation BS zugeführt werden und dort zum Einstellen der Sendeeinheit TB bzw. der Antenne AB verwendet werden. Auf diese Weise können die Sendeeigenschaften der Sendestation BS an die Eigenschaften des ersten Übertragungskanals C1 angepasst werden, so dass die Übertragung in dieser Richtung verbessert werden kann.

Figur 2 zeigt ein Phasendiagramm, in dem die Datensymbole D1, D2, die von der Empfangsstation MS in Figur 1 ausgesendet werden sollen, nach ihrem Realteil Re und Imaginärteil Im eingetragen wurden. Bei diesem Ausführungsbeispiel wurde angenommen, dass die beiden Datensymbole D1, D2 identisch sind, also gleiche Phase und gleiche Amplitude aufweisen. Sie weisen einen Phasenwinkel $\alpha$ und eine Amplitude auf, die durch ihren Abstand vom Koordinatenursprung bestimmt ist. Bei diesem Ausführungsbeispiel soll der Kanalparameter P wie oben erwähnt, ein Phasenparameter sein. Der Wert des Kanalparameters P ist ein Winkel $\beta$. Die Verarbeitungseinheit PUM der Empfangsstation MS modifiziert nun den Winkel $\alpha$ des ersten Datensymbols D1, indem dieser um den Winkel $\beta$ erhöht wird. Dies ergibt das resultierende erste Datensymbol D1' mit einem Phasenwinkel $\alpha+\beta$. Die Phase des zweiten Datensymbols D2, die ebenfalls dem Winkel $\alpha$ entspricht, wird dadurch modifiziert, dass der Winkel $\beta$, also der Wert des Kanalparameters P des ersten Übertragungskanals C1, von diesem subtrahiert wird. Hieraus ergibt sich das resultierende zweite Datensymbol D2'. Das resultierende zweite Datensymbol D2' hat folglich eine Phase von $\alpha-\beta$.

Bei diesem Ausführungsbeispiel wird lediglich die Phase der ersten und zweiten Datensymbole D1, D2 in Abhängigkeit vom Kanalparameter P eingestellt. Bei anderen Ausführungsbeispielen der Erfindung kann alternativ oder zusätzlich zur Phase auch die Amplitude der Datensymbole D1, D2 in Abhängigkeit eines Amplitudenparameters des ersten Übertragungskanals C1 verändert werden. Dies hätte zur Folge, dass der Abstand der resultierenden Datensymbole D1', D2' vom Koordinatenursprung des Phasendiagramms aus Figur 2 größer bzw. kleiner als der Abstand der ursprünglichen Datensymbole D1, D2 ist. In der Darstellung aus Figur 2 dagegen ist der Abstand der ursprünglichen Datensymbole D1, D2 und der resultierenden Datensymbole D1', D2' vom Koordinatenursprung jeweils identisch, da hier keine Amplitudenparameter des ersten Übertragungskanals C1 berücksichtigt werden.

Die Übertragung von Informationen über einen Amplitudenparameter des ersten Übertragungskanals könnte in Einzelfällen problematisch sein, da hohe Spitzen oder starke Einbrüche des über den ersten Übertragungskanal übertragenen Signals dazu führen können, dass das Signal, mit dem das erste Datensymbol übertragen wird, sehr klein wird oder sehr große Amplitudenwerte erreicht. Um dies zu vermeiden, kann es sinnvoll sein, keinen Amplitudenparameter, sondern lediglich einen Phasenparameter des ersten Übertragungskanals von der Empfangsstation zur Sendestation auf die beschriebene Art zu übertragen. Insbesondere in MIMO-Systemen ist eine Information über die Phasenverzerrung ohnehin von größerer Relevanz als eine Information über die Amplitudenverzerrung.

Die Übertragung von Amplitudenwerten als Kanalparameter des ersten Übertragungskanals durch Modifizierung eines Parameters des ersten Datensymbols D1 kann in den folgenden Weisen vorteilhaft erfolgen:

a) Amplitudenwerte des ersten Übertragungskanals, die anhand von über den ersten Übertragungskanal übertragenen Pilotsymbolen ermittelt wurden, werden jeweils um einen vorher festgelegten Faktor verkleinert. Dadurch wird vermieden, dass durch Addition bzw. Subtraktion dieser Amplitudenwerte auf die entsprechenden Amplitudenwerte des ersten und zweiten Datensymbols sehr große oder sehr kleine Amplitudenwerte resultieren. Hierdurch nimmt jedoch in gewisser Weise die Genauigkeit der übermittelten Amplitudenwerte ab.

b) Es könnte eine Begrenzung der maximal bzw. minimal resultierenden Amplitudenwerte der Amplitude des ersten und zweiten Datensymbols nach durchgeführter Addition bzw. Subtraktion der Amplitudenwerte des ersten Übertragungskanals durchgeführt werden.

c) Die zu übertragenden Amplitudenwerte, können in Phasenwerte umkodiert werden. Dass heißt die Amplitudenwerte der ersten und zweiten Datensymbole, die über den zweiten Übertragungskanal zu übertragen sind, werden gar nicht mehr durch die für den ersten Übertragungskanal ermittelten Amplitudenwerte verändert. Stattdessen erfolgt nach einer zuvor festzulegenden Kodierung bei der Empfangsstation eine Umrechung der Amplitudenwerte in entsprechende Phasenwerte. Diese Umrechnung wird im Sinne einer Dekodierung bei der Sendestation anschließend wieder rückgängig gemacht. Um bei einem solchen System sowohl Phasenwerte als auch Amplitudenwerte für den ersten Übertragungskanal über den zweiten Übertragungskanal zur Sendestation zu übertragen, sind dann jedoch beispielsweise vier Datensymbole notwendig: Zwei Datensymbole, mit denen der Phasenwert übertragen wird und zwei weitere Datensymbole, mit denen der zugehörige Amplitudenwert übertragen wird.

Bei diesem Ausführungsbeispiel wird angenommen, dass das zweite Datensymbol D2 unmittelbar nach dem ersten Datensymbol D1 von der Empfangsstation MS zur Sendestation BS übertragen wird. Für nicht unmittelbar hintereinander übertragene Datensymbole kann angenommen werden, dass sich die beiden Übertragungskanäle C1, C2 stationär verhalten. Diese Annahme gilt, sofern die beiden Datensymbole innerhalb der Kohärenzzeit des verwendeten Übertragungskanals übertragen werden. Dies ist die Zeit, während derer sich der Übertragungskanal zwischenzeitlich nicht merklich ändert. Bei bewegter Sendestation oder Empfangsstation hängt die Kohärenzzeit im Wesentlichen von der Geschwindigkeit der beweglichen Stationen ab.

Bei diesem Ausführungsbeispiel sind die ersten und zweiten Datensymbole D1, D2 ebenfalls Pilotsymbole, die von der Sendestation BS zur Schätzung des zweiten Übertragungskanals C2 verwendet werden. Daher sind die beiden Datensymbole D1, D2 der Sendestation BS bekannt. Aufgrund der Stationarität des zweiten Übertragungskanals C2 während der Übertragung der beiden Datensymbole D1, D2 kann durch einfache Subtraktion der Phase des zweiten resultierenden Datensymbols D2' ($\alpha$-$\beta$) von der Phase des ersten resultierenden Datensymbols D1' ($\alpha$+$\beta$) und anschließende Division durch 2 der Wert $\beta$ des Kanalparameters P des ersten Übertragungskanals C1 in der Empfangsstation BS berechnet werden:

$$\beta = (( \alpha+\beta ) - (\alpha-\beta )) / 2.$$

Aufgrund der Stationarität des zweiten Übertragungskanals C2 im betrachteten Zeitraum ist die Phasenverzerrung, die während der Übertragung der resultierenden Datensymbole D1', D2' erfolgt, für beide Datensymbole gleich. Durch die vorstehende erläuterte Subtraktion wird dieser Einfluss des zweiten Übertragungskanals C2 automatisch wieder herausgerechnet und beeinflusst das Ergebnis nicht.

Wird in obiger Formel das Minuszeichen zwischen den Klammerausdrücken in ein Pluszeichen geändert, erhält man als Ergebnis den Wert von $\alpha$, dass heißt den Phasenwert für das erste und zweite Datensymbol ohne addierte bzw. subtrahierte Phasenwerte $\beta$ des ersten Übertragungskanals. $\alpha$ kann für die Durchführung einer Kanalschätzung des zweiten Übertragungskanals anhand des ersten und zweiten Datensymbols D1, D2 verwendet werden, da es sich, wie oben erwähnt, um der Sendestation bekannte Pilotsymbole handelt. Ein vom erwarteten Phasenwert des Pilotsymbols abweichender Phasenwert $\alpha$ ist durch die Phasenverzerrung des zweiten Übertragungskanals C2 bedingt.

Die Erfindung kann insbesondere dann vorteilhaft eingesetzt werden, wenn die Sendestation BS und die Empfangsstation MS jeweils eine Vielzahl von Antennen AB, AM aufweisen, die als sogenannte intelligente Antennen (Smart Antennas) betrieben werden. Die Kenntnis der Eigenschaften des ersten Übertragungskanals C1 ist bei solchen Systemen (insbesondere wenn es sich um MIMO-Systeme handelt) auf der Seite der Sendestation BS vorteilhaft, um eine möglichst gute Leistungsfähigkeit des Systems zu gewährleisten.

**Patentansprüche**

1. Verfahren zum Betrieb eines Funkkommunikationssystems, bei dem

   - eine Empfangsstation (MS) über einen ersten Übertragungskanal (C1) ein Signal (S1) von einer Sendestation (BS) empfängt,
   - von der Empfangsstation (MS) ein Kanalparameter (P) des ersten Übertragungskanals (C1) bestimmt wird

   - und ein Parameter ($\alpha$) wenigstens eines ohnehin von der Empfangsstation (MS) über einen zweiten Übertragungskanal (C2) zur Sendestation (BS) zu übertragenden ersten Datensymbols (D1) zur Mitteilung des Kanalparameters (P) des ersten Übertragungskanals (C1) an die Sendestation (BS) in Abhängigkeit von dem Kanalparameter (P) geändert wird.

2. Verfahren nach Anspruch 1, bei dem

   - die Empfangsstation (MS) das Datensymbol (D1) zur Sendestation (BS) überträgt
   - und die Sendestation (BS) den Kanalparameter (P) des ersten Übertragungskanals (C1) anhand des empfangenen wenigstens einen Datensymbols (D1) ermittelt.

3. Verfahren nach einem der vorstehenden Ansprüche, bei dem der Kanalparameter (P) des ersten Übertragungskanals (C1) ein Phasenparameter und/oder ein Amplitudenparameter ist.

4. Verfahren nach einem der vorstehenden Ansprüche, bei dem der Parameter ($\alpha$) des von der Empfangsstation (MS) zur Sendestation (BS) zu übertragenden ersten Datensymbols (D1) durch Addition oder Subtraktion des Wertes ($\beta$) des Kanalparameters (P) des ersten Übertragungskanals (C1) geändert wird.

5. Verfahren nach Anspruch 4, bei dem zusätzlich ein Parameter ($\alpha$) eines zweiten von der Empfangsstation (MS) zur Sendestation (BS) zu übertragenden Datensymbols (D2) durch eine im Vergleich zum ersten Datensymbol (D1) entgegengesetzte mathematische Operation um den Wert ($\beta$) des Kanalparameters (P) des ersten Übertragungskanals (C1) geändert wird.

6. Verfahren nach einem der vorstehenden Ansprüche, bei dem die von der Empfangsstation (MS) zu übertragenden Datensymbole (D1, D2), deren Parameter in Abhängigkeit des Kanalparameters (P) des ersten Übertragungskanals (C1) geändert wird, Pilotsymbole sind.

7. Verfahren nach einem der Ansprüche 1 bis 5, bei dem die von der Empfangsstation (MS) zu übertragenden Datensymbole (D1, D2), deren Parameter in Abhängigkeit des Kanalparameters (P) des ersten Übertragungskanals (C1) geändert wird, Nutzdaten sind.

8. Verfahren nach einem der vorstehenden Ansprüche, bei dem eine Vielzahl von ersten Übertragungskanälen (C1) zwischen der Sendestation (BS) und der Empfangsstation (MS) vorhanden ist und das für jeden dieser ersten Übertragungskanäle (C1) durchgeführt wird.

**9.** Verfahren nach Anspruch 8, bei dem

- die Empfängerstation (MS) eine Mehrzahl von Empfangsantennen (AM) und/oder die Sendestation (BS) eine Mehrzahl von Sendeantennen (AB) aufweist
- und zwischen je einer der Sendeantennen (AB) und einer der Empfangsantennen (AM) jeweils einer der ersten Übertragungskanäle (C1) angeordnet ist.

**10.** Empfangsstation (MS) für ein Funkkommunikationssystem

- mit einer Einheit (RM) zum Empfang .eines Signals (S1) von einer Sendestation (BS) über einen ersten Übertragungskanal (C1),
- mit einer Einheit (CE) zum Bestimmen eines Kanalparameters (P) des ersten Übertragungskanals (C1)
- und mit einer Einheit (PUM) zum Ändern eines Parameters ($\alpha$) wenigstens eines ohnehin von der Empfangsstation (MS) über einen zweiten Übertragungskanal (C2) zur Sendestation (BS) zu übertragenden Datensymbols (D1) in Abhängigkeit von dem Kanalparameter (P) des ersten Übertragungskanals (C1) zur Mitteilung des Kanalparameters (P) an die Sendestation (BS).

**11.** Sendestation (BS) für ein Funkkommunikationssystem

- mit einer Einheit (TB) zum Senden eines Signals (S1) über einen ersten Übertragungskanal (C1) an eine Empfangsstation (MS),
- mit einer Einheit (RB) zum Empfang wenigstens eines ohnehin von der Empfangsstation (MS) über einen zweiten Übertragungskanal (C2) zu Sendestation (BS) zu übertragenden Datensymbols (D1) wobei ein Parameter ($\alpha$) des Datensymbols (D1) zur Mitteilung eines Kanalparameters (P) des ersten Übertragungskanals (C1) an die Sendestation (BS) in Abhängigkeit von dem wenigstens einen Kanalparameter (P) des ersten Übertragungskanals (C1) geändert ist,
- und mit einer Einheit (PUB) zum Ermitteln des Kanalparameters (P) anhand des empfangenen wenigstens einen Datensymbols (D1).

**Claims**

**1.** Method for operating a radiocommunication system, in which

- a receiving station (MS) receives a signal (S1) from a transmitting station (BS) via a first transmission channel (C2),
- a channel parameter (P) of the first transmission channel (C1) is defined by the receiving station (MS)
- and a parameter ($\alpha$) of at least one first data symbol (D1) which is to be transmitted in any event from the receiving station (MS) via a second transmission channel (C2) to the transmitting station (BS) is modified to notify the channel parameter (P) of the first transmission channel (C1) to the transmitting station (BS) depending on the channel parameter (P).

**2.** Method according to claim 1, in which

- the receiving station (MS) transmits the data symbol (D1) to the transmitting station (BS)
- and the transmitting station (BS) determines the channel parameter (P) of the first transmission channel (C1) using the received at least one data symbol (D1).

**3.** Method according to one of the preceding claims, in which the channel parameter (P) of the first transmission channel (C1) is a phase parameter and/or an amplitude parameter.

**4.** Method according to one of the preceding claims, in which the parameter ($\alpha$) of the first data symbol (D1) which is to be transmitted from the receiving station (MS) to the transmitting station (BS) is modified through addition or subtraction of the value ($\beta$) of the channel parameter (P) of the first transmission channel (C2).

**5.** Method according to claim 4, in which a parameter ($\alpha$) of a second data symbol (D2) which is to be transmitted from the receiving station (MS) to the transmitting station (BS) is modified through an inverse mathematical operation compared with the first data symbol (D1) by the value ($\beta$) of the channel parameter (P) of the first transmission channel (C1).

**6.** Method according to one of the preceding claims, in which the data symbols (D1, D2) which are to be transmitted from the receiving station (MS), the parameter of which is modified depending on the channel parameter (P) of the first transmission channel (C1), are pilot symbols.

**7.** Method according to one of claims 1 to 5, in which the data symbols (D1, D2) which are to be transmitted from the receiving station (MS), the parameter of which is modified depending on the channel parameter (P) of the first transmission channel (C1), are user data.

**8.** Method according to one of the preceding claims, in which a multiplicity of first transmission channels (C1) are present between the transmitting station (BS) and the receiving station (MS), said method being carried out for each of these first transmission channels (C1).

**9.** Method according to claim 8, in which

- the receiver station (MS) has a plurality of receiving antennas (AM) and/or the transmitting station (BS) has a plurality of transmitting antennas (AB)
- and one of the first transmission channels (C1) is disposed in each case between one of the transmitting antennas (AB) and one of the receiving antennas (AM).

**10.** Receiving station (MS) for a radiocommunication system

- with a unit (RM) for receiving a signal (S1) from a transmitting station (BS) via a first transmission channel (C2),
- with a unit (CE) for defining a channel parameter (P) of the first transmission channel (C1)
- and with a unit (PUM) for modifying a parameter ($\alpha$) of at least one data symbol (D1) which is to be transmitted in any event from the receiving station (MS) via a second transmission channel (C2) to the transmitting station (BS) depending on the channel parameter (P) of the first transmission channel (C1) in order to notify the channel parameter (P) to the transmitting station (BS).

**11.** Transmitting station (BS) for a radiocommunication system

- with a unit (TB) for transmitting a signal (S1) via a first transmission channel (C1) to a receiving station (MS),
- with a unit (RB) for receiving at least one data symbol (D1) which is to be transmitted in any event from the receiving station (MS) via a second transmission channel (C2) to the transmitting station (BS), whereby a parameter ($\alpha$) of the data symbol (D1) is modified in order to notify a channel parameter (P) of the first transmission channel (C1) to the transmitting station (BS) depending on the at least one channel parameter (P) of the first transmission channel (C1),
- and with a unit (PUB) for determining the channel parameter (P) using the received at least one data symbol (D1).

**Revendications**

**1.** Procédé destiné à faire fonctionner un système de radiocommunication, dans lequel

- une station réceptrice (MS) reçoit un signal (S1) d'une station émettrice (BS) par l'intermédiaire d'un premier canal de transmission (C1),
- un paramètre de canal (P) du premier canal de transmission (C1) est déterminé par la station réceptrice (MS)
- et un paramètre ($\alpha$) au moins d'un premier symbole de données (D1) à transmettre de toute façon par la station réceptrice (MS) à la station émettrice (BS) par l'intermédiaire d'un second canal de transmission (C2) est modifié, en fonction du paramètre de canal (P), pour la communication à la station émettrice (BS) du paramètre de canal (P) du premier canal de transmission (C1).

**2.** Procédé selon la revendication 1, dans lequel

- la station réceptrice (MS) transmet le symbole de données (D1) à la station émettrice (BS)
- et la station émettrice (BS) détermine le paramètre de canal (P) du premier canal de transmission (C1) à l'aide de l'au moins un symbole de données (D1) reçu.

**3.** Procédé selon l'une quelconque des revendications précédentes, dans lequel le paramètre de canal (P) du premier canal de transmission (C1) est un paramètre de phase et/ou un paramètre d'amplitude.

**4.** Procédé selon l'une quelconque des revendications précédentes, dans lequel le paramètre ($\alpha$) du premier symbole de données (D1) à transmettre par la station réceptrice (MS) à la station émettrice (BS) est modifié par addition ou soustraction de la valeur ($\beta$) du paramètre de canal (P) du premier canal de transmission (C1).

**5.** Procédé selon la revendication 4, dans lequel en outre, un paramètre ($\alpha$) d'un second symbole de données (D2) à transmettre par la station réceptrice (MS) à la station émettrice (BS) est modifié au moyen d'une opération mathématique opposée en comparaison avec le premier symbole de données (D1), de la valeur ($\beta$) du paramètre de canal (P) du premier canal de transmission (C1).

**6.** Procédé selon l'une quelconque des revendications précédentes, dans lequel les symboles de données (D1, D2) à transmettre par la station réceptrice, dont le paramètre est modifié en fonction du paramètre de canal (P) du premier canal de transmission (C1), sont des symboles pilotes.

7. Procédé selon l'une quelconque des revendications 1 à 5, dans lequel
les symboles de données (D1, D2) à transmettre par la station réceptrice (MS), dont le paramètre est modifié en fonction du paramètre de canal (P) du premier canal de transmission (C1), sont des données utiles.

8. Procédé selon l'une quelconque des revendications précédentes, dans lequel
une pluralité de premiers canaux de transmission (C1) sont présents entre la station émettrice (BS) et la station réceptrice (MS), et qui est exécuté pour chacun de ces premiers canaux de transmission (C1).

9. Procédé selon la revendication 8, dans lequel

- la station réceptrice (MS) présente une pluralité d'antennes réceptrices (AM) et/ou la station émettrice (BS) présente une pluralité d'antennes émettrices (AB)
- et dans lequel respectivement un des premiers canaux de transmission (C1) est disposé entre respectivement une des antennes émettrices (AB) et une des antennes réceptrices (AM).

10. Station réceptrice (MS) pour un système de radiocommunication

- comprenant une unité (RM) destinée à la réception d'un signal (S1) d'une station émettrice (BS) par l'intermédiaire d'un premier canal de transmission (C1),
- comprenant une unité (CE) destinée à déterminer un paramètre de canal (P) du premier canal de transmission (C1)
- et comprenant une unité (PUM) destinée à modifier un paramètre (α) au moins d'un premier symbole de données (D1) à transmettre de toute façon par la station réceptrice (MS) à la station émettrice (BS) par l'intermédiaire d'un second canal de transmission (C2), en fonction du paramètre de canal (P) du premier canal de transmission (C1), pour la communication du paramètre de canal (P) à la station émettrice (BS).

11. Station émettrice (BS) pour un système de radiocommunication

- comprenant une unité (TB) destinée à l'émission d'un signal (S1) à une station réceptrice (MS) par l'intermédiaire d'un premier canal de transmission (C1),
- comprenant une unité (RB) destinée à la réception au moins d'un symbole de données (D1) à transmettre de toute façon par la station réceptrice (MS) à la station émettrice (BS) par l'intermédiaire d'un second canal de transmission (C2), un paramètre (α) du symbole de données (D1) étant modifié pour la communication à la station émettrice (BS) d'un paramètre de canal (P) du premier canal de transmission (C1), en fonction de l'au moins un paramètre de canal (P) du premier canal de transmission (C1),
- et comprenant une unité (PUB) destinée à déterminer le paramètre de canal (P) à l'aide de l'au moins un symbole de données (D1) reçu.

FIG 1

# FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03063526 A1